# EUROPEAN PATENT SPECIFICATION

(11) **EP 3 980 854 B1**
(45) Date of publication and mention of the grant of the patent: **27.08.2025**
(21) Application number: 20746892.7
(22) Date of filing: 13.07.2020
(51) Int. Cl.: G05B 19/418

(54) **A SYSTEM FOR GENERATION OF A HOLISTIC DIGITAL TWIN**
SYSTEM ZUR ERZEUGUNG EINES GANZHEITLICHEN DIGITALEN ZWILLINGS
SYSTÈME DE GÉNÉRATION D'UN DOUBLE NUMÉRIQUE HOLISTIQUE

(30) Priority: 13.08.2019 EP 19191391
(43) Date of publication of application: 13.04.2022
(73) Proprietor: Siemens Aktiengesellschaft, 80333 München (DE)
(72) Inventor: BRUCKSCH, Michael, 96155 Buttenheim (DE); GEIPEL, Markus Michael, 80799 München (DE); LAMPARTER, Steffen, 85622 Feldkirchen (DE); WURM, Kai, 81739 München (DE)
(74) Representative: Siemens Patent Attorneys
(86) International application number: PCT/EP2020/069697
(87) International publication number: WO 2021/028135

(56) References cited:
- WO-A1-2006/119652
- US-A1- 2018 210 436

## Description

The invention relates to a method and system for providing a holistic digital twin of an industrial facility comprising a plurality of assets.

An industrial facility, in particular an automation system, can comprise a plurality of different components or assets. These assets can comprise hardware components and/or software components installed in the industrial facility. There is a plurality of different software tools used to plan, operate and maintain an industrial facility. To design and engineer a factory automation solution, several different tools can be used. For instance, a product designer may use a CAD software tool such as NX to perform product design. An automation designer can use tools such as NX, a factory layout tool such as Plant Simulation and/or an automation cell design tool such as Process Simulate. An electrical engineer as a user can use layout tools such as EPLAN whereas an automation engineer can use PLC programming tools such as TIA Portal. The different tools have their own individual data structures and modelling principles. Consequently, the use of these different tools leads to a fragmentation of information related to the respective industrial facility. There does not exist a holistic representation of the industrial facility, factory, station or production line. Additionally, once built, a physical installation of the industrial facility can deviate from the various plans.

US2018/0210436A1 - BURD et al. "INTEGRATED DIGITAL TWIN FOR AN INDUSTRIAL FACILITY" shows a method for monitoring of an industrial process for an industrial facility that includes providing an integrated facility digital twin (DT) implemented by a computer system which implements an aggregation algorithm that utilizes models including a plurality of inter-related static models.

WO 2006/119652 A1 is concerned with generating a unique representation of a physical asset from a plurality of datasets representing information relating to the physical asset. Each dataset is generated by a system that acquires the dataset in a system-specific format. Each dataset that includes information about the attributes of a physical asset is mapped to a corresponding system-specific global dataset, based on a global data model. The global system-specific datasets generated are merged together to generate a global dataset, based on the global data model. The global dataset therefore uniquely represents the physical asset.

Accordingly, it is an object of the present invention to provide a holistic digital twin of an industrial facility which can be processed at different lifecycle stages of the facility to improve an operation efficiency of the facility.

This object is achieved by a computer-implemented method comprising the features of claim 1.

The invention provides according to a first aspect a computer-implemented method for providing a holistic digital twin of an industrial facility comprising a plurality of assets, wherein the method comprises the steps of
converting asset related data collected from different tools used for planning and/or operation of said industrial facility in a tool specific data format and asset related data provided by data sources of the industrial facility in a data source specific data format into a common graph representation,
matching the graph representations of the converted asset related data to provide a mapping between the assets of said industrial facility and
merging the mapped assets of said industrial facility into a unified graph to provide the holistic digital twin of said industrial facility.

According to the first aspect of the present invention, data sources of the industrial facility providing asset related data in a data source specific data format comprise sensor assets and local memory of controllers installed in the industrial facility.

The holistic digital twin represents the industrial facility as a whole and not just as a collection of parts. The holistic digital twin relates to the complete industrial facility comprising intimately interconnected components represented by the digital twin. The holistic digital twin provides predictive analytical functions that allow to improve a product design, a process design as well as maintenance activities. A holistic digital twin can comprise multiple functional twins added to the respective product and manufacturing process over different lifecycle stages of the industrial facility. A digital twin can be defined as a smart dynamic virtual representation model of the physical product, production process or product utilization. The holistic digital twin makes it possible to duplicate and predict in a virtual world properties and performance features of a physical product, product line, manufacturing process of a complete industrial facility before a single item is physically acquired or produced.

In a possible embodiment of the computer-implemented method according to the first aspect of the present invention, the assets of said industrial facility comprise hardware components and software components installed in said industrial facility.

This provides the advantage that the holistic digital twin of the industrial facility may not only represent hardware components such as machines but also software components such as control routines installed in controllers of the industrial facility.

In a further possible embodiment of the computer-implemented method according to the first aspect of the present invention, each asset of said industrial facility comprises an associated unique asset identifier.

The unique asset identifier can be used across different hardware and/or software components and across different software tools used for different lifecycle stages of the industrial facility.

In a further possible embodiment of the computer-implemented method according to the first aspect of the present invention, the common graph representation of converted asset related data comprises for each asset a node connected via edges to other nodes representing other assets of the industrial facility having a physical or logical relation with the respective asset.

In a further possible embodiment of the computer-implemented method according to the first aspect of the present invention, the common graph representations generated by the conversion of the asset related data are stored as unified data in a central storage.

This has the advantage that a cloud platform can be provided for performing the computer-implemented method according to the first aspect of the present invention.

In a further possible embodiment of the computer-implemented method according to the first aspect of the present invention, the matching of the graph representations is performed by a graph matching algorithm.

This allows to use known graph matching algorithms.

In a further possible embodiment of the computer-implemented method according to the first aspect of the present invention, ambiguities and/or mismatches occurring during the matching of the graph representations are resolved in response to a user input.

This allows to resolve contradictions and to improve analytical results provided by the holistic digital twin of the industrial facility.

In a further possible embodiment of the computer-implemented method according to the first aspect of the present invention, ambiguities and/or mismatches occurring during matching of the graph representations are resolved automatically on the basis of received asset related data concerning assets affected by the observed ambiguities and/or mismatches triggered by the graph matching algorithm in response to the detected ambiguities and/or mismatches.

This has the advantage that ambiguities and/or mismatches can be resolved to a large extent automatically without interference by a user.

In a further possible embodiment of the computer-implemented method according to the first aspect of the present invention, the graph matching algorithm is machine learned.

This has the advantage that cumbersome and error-prone programming of a software code for the graph matching algorithm can be avoided. Further, machine learning can improve the search heuristic of the graph matching algorithm by incorporating successful data merges in the past.

In a further possible embodiment of the computer-implemented method according to the first aspect of the present invention, the tools providing the asset related data comprise tools of different lifecycle stages of said industrial facility, in particular engineering tools, operating management tools and/or service and maintenance tools.

Accordingly, the holistic digital twin provided by the computer-implemented method according to the first aspect of the present invention can be used for the complete lifetime of the industrial facility from a planning stage until the industrial facility is dismantled.

In a further possible embodiment of the computer-implemented method according to the first aspect of the present invention, the generated holistic digital twin is fed back to the tools used for planning and/or operation of said industrial facility to upgrade the respective tools and/or to establish automatically crosslinks between the different tools.

In the computer-implemented method according to the first aspect of the present invention, the generated holistic digital twin of the industrial facility is processed to simulate and/or to predict an operation behavior of said industrial facility.

This allows to plan and schedule predictive maintenance of the industrial facility and thereby to improve the production efficiency of the industrial facility.

In a further possible embodiment of the computer-implemented method according to the first aspect of the present invention, asset related data provided in a tool specific data format of a tool comprise image data representing the assets, acoustic data of sounds generated by the assets, text data describing the assets, graphical data, topological data of an asset topology and/or location data of asset locations.

Accordingly, the computer-implemented method can take into account a wide variety of different types of data originating from heterogeneous data sources.

The invention further provides according to a second aspect a system for generation of a holistic digital twin of an industrial facility accoring to claim 11.

In the following, possible embodiments of the different aspects of the present invention are described in more detail with reference to the enclosed figures.
- Fig. 1: shows a possible exemplary embodiment of a system used for generation of a holistic digital twin of an industrial facility according to the present invention;
- Fig. 2: shows a flowchart of a possible exemplary embodiment of a computer-implemented method for providing a holistic digital twin of an industrial facility according to a further aspect of the present invention;
- Figs. 3, 4, 5: show a diagram for illustrating an exemplary use case where a computer-implemented method has been performed to provide a holistic digital twin of an industrial facility.

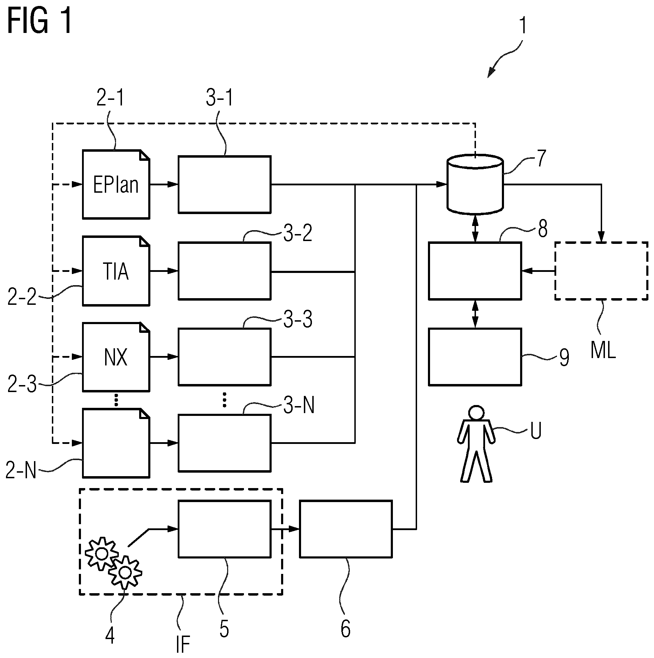

Fig. 1 shows schematically a possible architecture of a system 1 according to the present invention. The technical system 1 illustrated in Fig. 1 is used for the generation of a holistic digital twin of an industrial facility IF which comprises a plurality of assets 4. These assets 4 can include hardware components, in particular machine components and software components installed in the controllers of the industrial facility IF. Each asset of the industrial facility IE comprises in a preferred embodiment an associated unique asset identifier. This unique asset identifier can be used across different software tools 2 used in different lifecycle stages of the industrial facility IE. In the illustrated exemplary embodiment, different software tools 2-1, 2-2, 2-3 ... 2-N can be used to perform automated functions related to the planning, operation and maintenance of an industrial facility IF. These software tools 2 can for instance comprise engineering tools such as layout tools (e.g. EPLAN), PLC programming tools (such as TIA) or a computer-aided design tool such as NX. A number N of different software tools 2 may be available for performing automated functions during the different lifecycle stages of the industrial facility IF. The different software tools 2 can be stored in a possible embodiment in a database of the system 1. A software tool 2 can be loaded and supplied to an associated conversion unit 3-i as illustrated in Fig. 1. The conversion units 3-i are adapted to convert asset related data provided by different tools 2-i in a tool specific data format and used for planning and/or operation of the industrial facility into a common graph representation.

The industrial facility can be a complex industrial facility IF comprising a plurality of components or assets 4 generating asset related data. In the illustrated schematic diagram of Fig. 1, a physical industrial facility IF can comprise machines or other hardware components 4 including data acquisition units 5 which provide collected asset related data. The data acquisition units 5 can comprise sensors integrated or attached to a physical asset 4 of the industrial facility. The sensors can collect sensor data from physical components of the industrial facility IF including different production lines and/or manufacturing machines. The sensors can form also hardware assets of the industrial facility IF. The collected data provided by the data acquisition units 5 can comprise an asset identifier of a physical asset or component. This asset identifier can comprise for instance a scanned QR code or an RFID. The asset identifier can be connected or related to a semantic description of the respective asset. For instance, the asset identifier can indicate a type of the respective asset. The collected data can further comprise location information concerning the location of the physical asset 4. The location information can be provided in a possible embodiment by an indoor localization system. Further, the location data can be provided by AGVs that can report their position in a shop floor of the industrial facility IF. As can be seen in Fig. 1, the sensors provide as data sources of the industrial facility IF asset related data in a data source specific data format. The system 1 according to the present invention comprises conversion units 6 to convert asset related data provided by the data sources or sensors of the industrial facility IF having a data source specific data format into a common graph representation. Accordingly, in the system 1 of the present invention, there are conversion units 3 for conversion of asset related data originating from software tools 2 and conversion units 6 used to convert asset related data provided by physical data sources of the physical industrial facility IF. The different conversion units 3, 6 convert the received asset related data into common graph representations. The common graph representations of converted asset related data can comprise in a possible embodiment for each asset a node connected via edges to other nodes representing other assets of the same industrial facility IF having a physical relation (e.g. distance between assets) or logical relation (e.g. forms part of) with the respective asset. Common graph representations generated by the conversions of the asset related data are stored as unified data in a central storage 7 of the system 1 as illustrated in Fig. 1. In a possible embodiment, the central storage 7 can comprise a knowledge graph database. Each asset of the industrial facility IF including physical assets (such as devices) and logical assets (such as information or datasets) can be represented by a node in the common graph representation. Each node of the common graph representation can also contain properties describing for instance the type of the respective asset and its potential configuration.

The system 1 comprises a processing unit 8 adapted to process graph representations stored in the central storage 7 of the system 1. The processing unit 8 can include a matching unit adapted to match the graph representations of the converted asset related data to provide a mapping between the assets of the industrial facility. The processing unit 8 can further comprise a merging unit adapted to merge the mapped assets of the industrial facility into a unified graph to provide the holistic digital twin of the industrial facility IF. The holistic digital twin of the industrial facility can then be stored in the central storage 7 of the system 1 for further processing. In a possible embodiment, the matching of the graph representations is performed by a processor of the processing unit 8 using a graph matching algorithm. The graph matching algorithm can be used to connect different views or graph representations collected and stored in the central data storage 7 of the system 1. The matching algorithm can use both topological information encoded in the graph as well as type information of the nodes and edges. In a possible embodiment, to facilitate the matching, type information can follow a hierarchy that can be exploited. For example, a SIMATIC S7-15PLC with a SIMATIC PLC which is a PLC which in turn is an asset of the industrial facility IF.

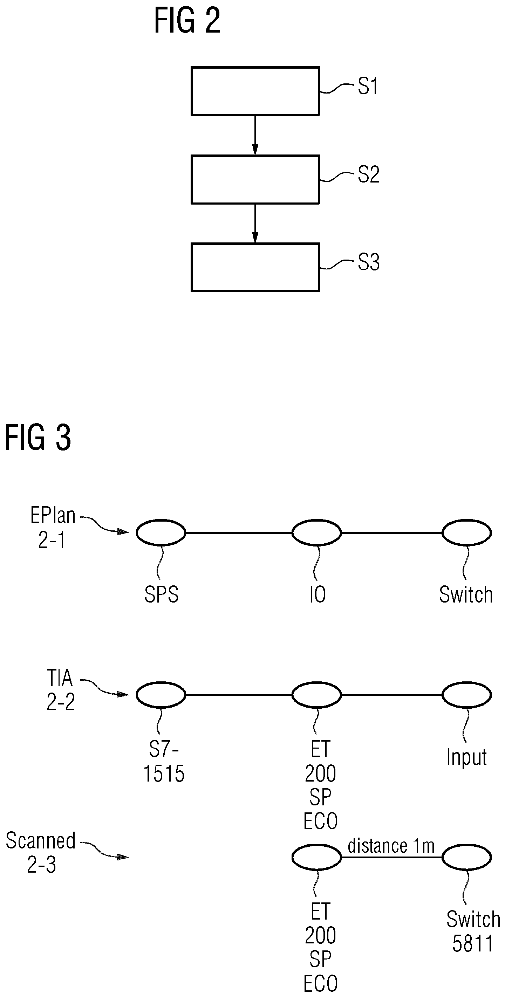

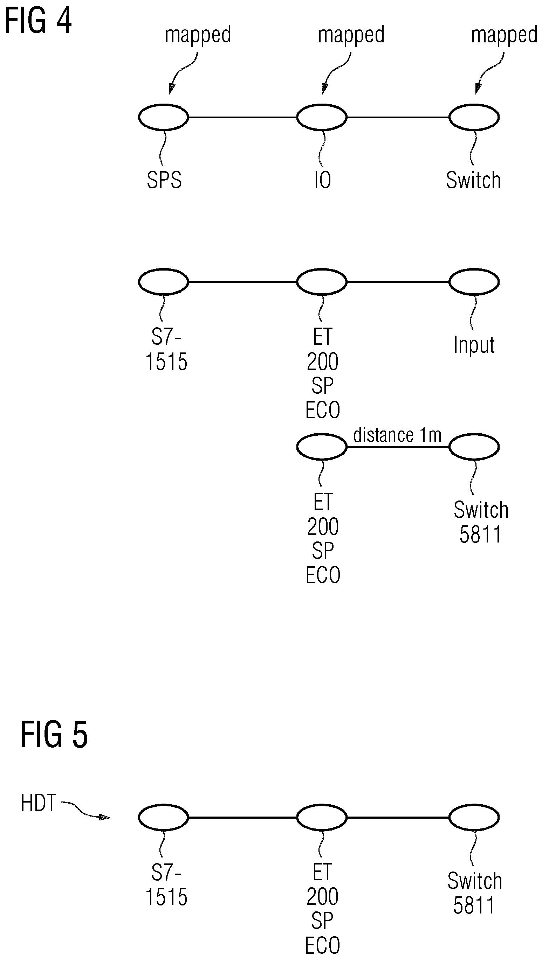

Figs. 3, 4, 5 illustrate different steps performed by the processing unit 8. Information from different tools 2 such as EPLAN, TIA and/or partitional information from performed scans are illustrated in Fig. 3. The system 1 is aware that an S7-1515 is a PLC and that an ET 200SP E/O is an I/O and that a switch 5811 is a switch and an input. In a possible embodiment, the matching algorithm may check that the network topology is compatible. From this, the mapping result as illustrated in Fig. 4 can be inferred. The unified graph can be generated by merging as illustrated in Fig. 5.

The merging unit can be adapted to merge the mapped assets as shown in Fig. 4 into a unified graph to provide the holistic digital twin HDT of the industrial facility IF as illustrated in Fig. 5. In a possible embodiment, ambiguities and/or mismatches occurring during the matching of the graph representations can be resolved in response to a user input. The system 1 can comprise in a possible embodiment a user interface 9 to receive a user input from a user U processed to resolve ambiguities and/or mismatches occurring during the matching of the graph representations by the graph matching algorithm. In a possible embodiment, the system 1 can ask a user U to identify assets and/or to verify a specific connection between assets of the industrial facility. With this information, the matching algorithm can improve the matching process. The user interface 9 can also be used to receive user input processed to resolve conflicts detected by the matching algorithm. For example, the data from an EPLAN software tool may be contradicting the data from a TIA Portal and the user input is processed to resolve the detected mismatch. Machine learning (ML) techniques can be used to improve a search heuristic of the matching algorithm by incorporating successful data merges in the past. In a possible embodiment, the holistic view or holistic digital twin HDT can be fed back to the original data sources, in particular to the different software tools 2 (as illustrated by a dashed line in Fig. 1. This feedback allows to upgrade the respective software tools 2. Further, the feedback can be used to establish automatically crosslinks between the different software tools 2 such as EPLAN, TIA or NX. This in turn can improve the parallel handling of different software tools 2-i by an operator or user exploiting automatically established crosslinks between the different software tools 2-i. Accordingly, a user U can jump from a certain function of a first software tool directly via an established crosslink to a second function of the other software tool. As can be seen in Fig. 1, asset related data is collected from the different tools 2-i and converted automatically by associated converters 3 to provide a common graph representation. With the system 1 according to the present invention not only data from software tools 2-i is collected but also data from physical data sources or sensors installed in the industrial facility IF. Data provided by the data sources of the industrial facility IF in a data source specific format are also converted automatically into the common graph representation of the system 1. The converted data output by the converters 3-i and 6 are stored in the central storage 7. Then, a graph matching algorithm is run on a processor of the processing unit 8. In case that an error occurs due to conflicts or ambiguity, a user U can be asked for more information via the user interface 9 of the system 1. Finally, the matched and merged data can be fed back to the original data sources, in particular software tools 2. If the process is repeated many times, this data of multiple matchings can be used for deriving an improved search heuristic by machine learning ML. The common graph representation is used to automate the merging of several different heterogeneous data sources including both software data sources (software tools) but also physical data sources installed in the industrial facility IF itself. The system 1 unifies and completes otherwise fragmented information of the industrial facility IF into a holistic digital twin HDT of the industrial facility IF representing the industrial facility IF as a whole over different lifecycle stages. The holistic digital twin HDT provides a unified view of the industrial facility IF which can be processed for planning and/or executing maintenance, performing a re-engineering of components of the industrial facility and/or to provide extensions of the industrial facility IF. Further, the holistic digital twin HDT can be processed for detection of faults occurring within the industrial facility IF. The conversion mechanisms can provide a translation of different data formats into a unified graph format of the system 1.

The generated holistic digital twin HDT of the industrial facility IF can be further processed to simulate and/or to predict an operation behavior of the industrial facility. The data sources of the industrial facility IF providing asset related data in a data source specific data format comprises both sensor assets of the industrial facility IF but also memory assets of the industrial facility IF, that is local memories of controllers installed in the industrial facility IF. Asset related data provided by a tool specific data format from a software tool 2 can comprise different kinds of data in heterogeneous data formats. Asset related data provided by tool specific data format by a software tool 2 can include image data representing assets of the industrial facility IF. Asset related data can further comprise acoustic data of sounds generated by the assets 4. Asset related data can further comprise text data describing assets 4 of the industrial facility IF. Moreover, the asset related data can comprise graphical data and/or topological data of an asset topology. Further, the asset related data can comprise location data of asset locations.

Fig. 2 shows a flowchart of a possible exemplary embodiment of a computer-implemented method for providing a holistic digital twin HDT of an industrial facility IF including a plurality of different software and/or hardware components or assets. In the illustrated exemplary embodiment, the computer-implemented method comprises three main steps.

In a first step S1, asset related data collected from different tools used for planning and/or operation of an industrial facility IF in a tool specific data format as well as asset related data provided by data sources of the industrial facility IF in a data source specific data format are converted into a common graph representation.

In a further step S2, the graph representations of the converted asset related data are matched to provide a mapping between the assets of the industrial facility as also illustrated in Fig. 4.

In a further step S3, the mapped assets of the industrial facility are merged into a unified graph as illustrated in Fig. 5 to provide the holistic digital twin HDT of the industrial facility. The holistic digital twin HDT can be stored and used for further processing. Further, the holistic digital twin HDT can be fed back to the tools 2 to upgrade the respective tools 2 and to establish automatically crosslinks between the different tools 2. Accordingly, the feedback can be exploited to improve the quality of the different software tools 2 and to improve the parallel handling of different software tools 2 by a user.

In a possible embodiment, the computer-implemented method as illustrated in Fig. 2 can be implemented on a web server of a cloud platform which can be connected via a data network such as an Internet to several industrial facilities IFs at different customer sites. The conversion of the asset related data by the converters 6 can either take place at the customer site and/or at the cloud platform. The created holistic digital twin HDT such as illustrated in Fig. 5 can in a possible embodiment be displayed on a display unit of the graphical user interface 9 of the system 1 as illustrated in Fig. 1 but also on mobile user terminals at the site of the industrial facility IF where hardware components and/or machines 4 are located to assist operators, for instance, in performing maintenance activities at the location of the industrial facility IF. The transferred current holistic digital twin HDT may be provided to different users U performing different functions concerning the same industrial facility IF in parallel, i.e. at the same time. For instance, an application executed on a processor of a mobile handheld user equipment may process the holistic digital twin HDT to assist a user in performing a maintenance or a repair activity at the physical customer site of the industrial facility. At the same time, the holistic digital twin HDT generated by the computer-implemented method according to the present invention can be processed to re-engineer the industrial facility IF and/or to simulate and/or to predict an operation behavior of the industrial facility IF. Accordingly, different software tools and/or applications can have access to the holistic digital twin HDT of the industrial facility to assist different users in performing different functions over the lifecycle stages of the same industrial facility.

The holistic digital twin HDT can be further processed to derive automatically lifecycle specific digital twins used for different lifecycle stages of the industrial facility IF such as a digital product twin, a digital production twin and/or a digital performance twin. The digital product twin can be used during product development of a product. The digital production twin can be used during manufacturing engineering and/or during production operations. The digital performance twin can be used for product simulation and during the utilization life of the manufactured product. Accordingly, the generated complex holistic digital twin HDT of the industrial facility IFcan be processed to derive automatically partial views for different lifecycle stages of the industrial facility IF. The derived digital twins can be distributed to associated user S participating in the system 1 according to the present invention.

A derived digital twin requires less memory space than the complex holistic digital twin HDT of the industrial facility IF used for all life cycle stages of the industrial facility IF. Consequently user terminals with limited memory resources may operate on a received derived digital twin instead on the HDT.

## Claims

1. A computer-implemented method for providing a holistic digital twin (HDT) of an industrial facility (IF) comprising a plurality of assets,
wherein the method comprises the steps of:
(a) converting (S1) asset related data collected from different tools (2) used for planning and/or operation of said industrial facility (IF) in a tool specific data format and asset related data provided by data sources of the industrial facility (IF) in a data source specific data format into a common graph representation,
wherein data sources of the industrial facility (IF) providing asset related data in a data source specific data format comprise sensor assets and local memory of controllers installed in said industrial facility (IF);
(b) matching (S2) the graph representations of the converted asset related data to provide a mapping between the assets of said industrial facility (IF); and
(c) merging (S3) the mapped assets of said industrial facility (IF) into a unified graph to provide the holistic digital twin (HDT) of said industrial facility (IF)
wherein the common graph representation of converted asset related data comprises for each asset a node connected via edges to other nodes representing other assets of said industrial facility (IF) having a physical or logical relation with the respective asset,
wherein the tools (2) providing the asset related data comprise tools of different lifecycle stages of said industrial facility (IF), in particular engineering tools, operation management tools and/or service and maintenance tools, and
wherein the generated holistic digital twin (HDT) of the industrial facility (IF) is processed to simulate and/or to predict an operation behavior of said industrial facility (IF) and used to plan and schedule predictive maintenance of the industrial facility and thereby to improve the production efficiency of the industrial facility.

2. The computer-implemented method according to claim 1 wherein the assets (4) of said industrial facility (IF) comprise hardware components and software components installed in said industrial facility (IF).

3. The computer-implemented method according to claim 1 or 2 wherein each asset (4) of said industrial facility (IF) comprises an associated unique asset identifier.

4. The computer-implemented method according to any of the preceding claims 1 to 3 wherein the common graph representations generated by the conversions of the asset related data are stored as unified data in a central storage (7).

5. The computer-implemented method according to any of the preceding claims 1 to 4 wherein the matching of the graph representations is performed by a graph matching algorithm.

6. The computer-implemented method according to any of the preceding claims 1 to 5 wherein ambiguities and/or mismatches occurring during the matching of the graph representations are resolved in response to a user input.

7. The computer-implemented method according to any of the preceding claims 1 to 6 wherein ambiguities and/or mismatches occurring during matching of the graph representations are resolved automatically on the basis of received asset related data concerning assets affected by the observed ambiguities and/or mismatches triggered by the graph matching algorithm in response to the detected ambiguities and/or mismatches.

8. The computer-implemented method according to any of the preceding claims 5 to 7 wherein the graph matching algorithm is machine learned.

9. The computer-implemented method according to any of the preceding claims 1 to 8 wherein the generated holistic digital twin (HDT) is fed back to the tools (2) used for planning and/or operation of said industrial facility (IF) to upgrade the respective tools (2) and/or to establish automatically crosslinks between the different tools (2).

10. The computer-implemented method according to any of the preceding claims 1 to 9 wherein asset related data provided in a tool specific data format of a tool (2) comprise image data representing the assets, acoustic data of sounds generated by the assets,
text data describing the assets,
graphical data, topological data of an asset topology and/or location data of asset locations.

11. A system used for generation of a holistic digital twin (HDT) of an industrial facility (IF) which comprises a plurality of assets,
said system (1) comprising:
(a) conversion units (36) adapted to convert asset related data collected from different tools (2) used for planning and/or operation of said industrial facility (IE) in a tool specific data format and asset related data provided by data sources of the industrial facility (IF) in a data source specific data format into a common graph representation,
wherein data sources of the industrial facility (IF) providing asset related data in a data source specific data format comprise sensor assets and local memory of controllers installed in said industrial facility (IF);
(b) a matching unit (8) adapted to match the graph representations of the converted asset related data to provide a mapping between the assets of said industrial facility (IF); and
(c) a merging unit (8) adapted to merge the mapped assets of said industrial facility (IF) into a unified graph to provide the holistic digital twin (HDT) of said industrial facility (IF),
wherein the common graph representation of converted asset related data comprises for each asset a node connected via edges to other nodes representing other assets of said industrial facility (IF) having a physical or logical relation with the respective asset,
wherein the tools (2) are set up for providing the asset related data comprise tools of different lifecycle stages of said industrial facility (IF), in particular engineering tools, operation management tools and/or service and maintenance tools, and
wherein the system is set up to process the generated holistic digital twin (HDT) of the industrial facility (IF) for simulating and/or to predicting an operation behavior of said industrial facility (IF) and for planning and scheduling predictive maintenance of the industrial facility and thereby for improving the production efficiency of the industrial facility.

## Patentansprüche

1. Computergestütztes Verfahren zum Bereitstellen eines holistischen digitalen Zwillings (HDT) von einer Industrieanlage (IF) mit mehreren Assets,
wobei das Verfahren folgende Schritte umfasst:
(a) Umwandeln (S1) von assetbezogenen Daten, die von verschiedenen Tools (2), welche zum Planen und/oder Betreiben der Industrieanlage (IF) benutzt werden, in einem tool-spezifischen Datenformat erfasst werden, und von assetbezogenen Daten, die von Datenquellen der Industrieanlage (IF) in einem datenquellenspezifischen Datenformat bereitgestellt werden, in eine allgemeine Graphdarstellung, wobei Datenquellen der Industrieanlage (IF), die assetbezogene Daten in einem datenquellenspezifischen Datenformat bereitstellen, Sensor-Assets und lokalen Arbeitsspeicher von in der Industrieanlage (IF) installierten Controllern umfassen,
(b) Matching (S2) der Graphdarstellungen der umgewandelten assetbezogenen Daten zwecks Bereitstellens einer Zuordnung zwischen den Assets der Industrieanlage (IF) und
(c) Zusammenfassen (S3) der zugeordneten Assets der Industrieanlage (IF) in einem vereinheitlichten Graphen zwecks Bereitstellens des holistischen digitalen Zwillings (HDT) der Industrieanlage (IF),
wobei die allgemeine Graphdarstellung von umgewandelten assetbezogenen Daten für jedes Asset einen Knoten umfasst, der über Kanten mit anderen Knoten verbunden ist, die andere Assets der Industrieanlage (IF) darstellen, bei denen ein physischer oder logischer Zusammenhang mit dem jeweiligen Asset besteht,
wobei die die assetbezogenen Daten bereitstellenden Tools (2) Tools für verschiedene Lebenszyklusphasen der Industrieanlage (IF), insbesondere Engineering-Tools, Betriebsführungs-Tools und/oder Wartungs- und Instandhaltungs-Tools, umfassen, und wobei der generierte holistische digitale Zwilling (HDT) der Industrieanlage (IF) so verarbeitet wird, dass er ein Betriebsverhalten der Industrieanlage (IF) simuliert und/oder prognostiziert, und zum Planen und zeitlichen Einplanen von prädiktiver Instandhaltung der Industrieanlage und somit zum Verbessern der Produktionseffizienz der Industrieanlage benutzt wird.

2. Computergestütztes Verfahren nach Anspruch 1, wobei die Assets (4) der Industrieanlage (IF) in der Industrieanlage (IF) installierte Hardware- und Softwarekomponenten umfassen.

3. Computergestütztes Verfahren nach Anspruch 1 oder 2, wobei jedes Asset (4) der Industrieanlage (IF) eine zugehörige eindeutige Assetkennung umfasst.

4. Computergestütztes Verfahren nach einem der vorhergehenden Ansprüche 1 bis 3, wobei die durch die Umwandlung der assetbezogenen Daten generierten allgemeinen Graphdarstellungen als vereinheitlichte Daten in einem Zentralspeicher (7) gespeichert werden.

5. Computergestütztes Verfahren nach einem der vorhergehenden Ansprüche 1 bis 4, wobei das Matching der Graphdarstellungen mit einem Graph-Matching-Algorithmus durchgeführt wird.

6. Computergestütztes Verfahren nach einem der vorhergehenden Ansprüche 1 bis 5, wobei beim Matching der Graphdarstellungen auftretende Uneindeutigkeiten und/oder Diskrepanzen als Reaktion auf eine Benutzereingabe beseitigt werden.

7. Computergestütztes Verfahren nach einem der vorhergehenden Ansprüche 1 bis 6, wobei beim Matching der Graphdarstellungen auftretende Uneindeutigkeiten und/oder Diskrepanzen auf der Grundlage von empfangenen assetbezogenen Daten zu von den beobachteten Uneindeutigkeiten und/oder Diskrepanzen betroffenen Assets, die als Reaktion auf die erkannten Uneindeutigkeiten und/oder Diskrepanzen von dem Graph-Matching-Algorithmus ausgelöst werden, automatisch beseitigt werden.

8. Computergestütztes Verfahren nach einem der vorhergehenden Ansprüche 5 bis 7, wobei der Graph-Matching-Algorithmus maschinell erlernt wird.

9. Computergestütztes Verfahren nach einem der vorhergehenden Ansprüche 1 bis 8, wobei der generierte holistische digitale Zwilling (HDT) zwecks Aktualisierens der jeweiligen Tools (2) und/oder Einrichtens automatischer Querverbindungen zwischen den verschiedenen Tools (2) zu den Tools (2) zurückgeführt wird, die zum Planen und/oder Betreiben der Industrieanlage (IF) benutzt werden.

10. Computergestütztes Verfahren nach einem der vorhergehenden Ansprüche 1 bis 9, wobei in einem tool-spezifischen Format eines Tools (2) bereitgestellte assetbezogene Daten Folgendes umfassen: Bilddaten, die die Assets darstellen, akustische Daten zu Geräuschen, die von den Assets generiert werden, Textdaten, die die Assets beschreiben,
grafische Daten, topologische Daten zu einer Assettopologie und/oder
Standortdaten zu Assetstandorten.

11. System, das zum Generieren eines holistischen digitalen Zwillings (HDT) einer Industrieanlage (IF) benutzt wird, die mehrere Assets umfasst,
wobei das System (1) Folgendes umfasst:
(a) Umwandlungseinheiten (36), die so ausgelegt sind, dass sie assetbezogene Daten, die von verschiedenen Tools (2), welche zum Planen und/oder Betreiben der Industrieanlage (IF) benutzt werden, in einem tool-spezifischen Datenformat erfasst werden, und assetbezogene Daten, die von Datenquellen der Industrieanlage (IF) in einem datenquellenspezifischen Datenformat bereitgestellt werden, in eine allgemeine Graphdarstellung umwandeln,
wobei Datenquellen der Industrieanlage (IF), die assetbezogene Daten in einem datenquellenspezifischen Datenformat bereitstellen, Sensor-Assets und lokalen Arbeitsspeicher von in der Industrieanlage (IF) installierten Controllern umfassen,
(b) eine Matching-Einheit (8), die so ausgelegt ist, dass sie die Graphdarstellungen der umgewandelten assetbezogenen Daten zwecks Bereitstellens einer Zuordnung zwischen den Assets der Industrieanlage (IF) matcht, und
(c) eine Zusammenfassungseinheit (8), die so ausgelegt ist, dass sie die zugeordneten Assets der Industrieanlage (IF) in einem vereinheitlichten Graphen zwecks Bereitstellens des holistischen digitalen Zwillings (HDT) der Industrieanlage (IF) zusammenfasst,
wobei die allgemeine Graphdarstellung von umgewandelten assetbezogenen Daten für jedes Asset einen Knoten umfasst, der über Kanten mit anderen Knoten verbunden ist, die andere Assets der Industrieanlage (IF) darstellen, bei denen ein physischer oder logischer Zusammenhang mit dem jeweiligen Asset besteht,
wobei die Tools (2) zum Bereitstellen der assetbezogenen Daten eingerichtet sind und Tools für verschiedene Lebenszyklusphasen der Industrieanlage (IF), insbesondere Engineering-Tools, Betriebsführungs-Tools und/oder Wartungs- und Instandhaltungs-Tools, umfassen, und
wobei das System so eingerichtet ist, dass es den generierten holistischen digitalen Zwilling (HDT) der Industrieanlage (IF) zum Simulieren und/oder Prognostizieren eines Betriebsverhaltens der Industrieanlage (IF) und zum Planen und zeitlichen Einplanen von prädiktiver Instandhaltung der Industrieanlage und somit zum Verbessern der Produktionseffizienz der Industrieanlage verarbeitet.

## Revendications

1. Un procédé mis en œuvre par ordinateur pour donner un double numérique holistique (HDT) d'une installation (IF) industrielle comprenant une pluralité d'atouts,
dans lequel le procédé comprend les stades dans lesquels :
(a) on transforme (S1) en une représentation graphique commune une donnée, se rapportant aux atouts, collectée par différents outils (2), utilisés pour planifier et/ou faire fonctionner ladite installation (IF) industrielle, en un format de donnée spécifique à un outil, et une donnée, se rapportant aux atouts, donnée par des sources de données de l'installation (IF) industrielle, en un format de donnée spécifique à une source de données,
dans lequel des sources de données de l'installation (IF) industrielle donnant une donnée se rapportant aux atouts en un format de donnée spécifique à une source de données comprennent des atouts de capteur et une mémoire locale d'unité de commande installée dans ladite installation (IF) industrielle ;
(b) on fait correspondre (S2) les représentations graphiques de la donnée transformée se rapportant aux atouts pour donner une correspondance entre les atouts de ladite installation (IF) industrielle ; et
(c) on fusionne (S3) les atouts mis en correspondance de ladite installation (IF) industrielle en un graphe unifié pour donner le double (HDT) numérique holistique de ladite installation (IF) industrielle,
dans lequel la représentation graphique commune d'une donnée transformée se rapportant aux atouts comprend, pour chaque atout, un nœud relié par des bords à d'autres nœuds représentant d'autres atouts de ladite installation (IF) industrielle ayant une relation physique ou logique avec l'atout respectif,
dans lequel les outils (2) donnant la donnée se rapportant aux atouts comprend des outils d'étages de cycle de vie différents de ladite installation (IF) industrielle, en particulier des outils d'ingénierie, des outils de gestion des opérations et/ou des outils de service et d'entretien, et
dans lequel le double (HDT) numérique holistique créé de l'installation (IF) industrielle est traité pour simuler et/ou pour prévoir un comportement opérationnel de ladite installation (IF) industrielle et utilisé pour établir et planifier un entretien prédictif de l'installation industrielle et améliorer ainsi l'efficacité de production de l'installation industrielle.

2. Le procédé mis en œuvre par ordinateur suivant la revendication 1, dans lequel les atouts (4) de ladite installation (IF) industrielle comprennent des composants en matériel et des composants en logiciel installés dans ladite installation (IF) industrielle.

3. Le procédé mis en œuvre par ordinateur suivant la revendication 1 ou 2, dans lequel chaque atout (4) de ladite installation (IF) industrielle comprend un identifiant d'atout unique associé.

4. Le procédé mis en œuvre par ordinateur suivant l'une quelconque des revendications 1 à 3 précédentes, dans lequel les représentations graphiques communes créées par la transformation de la donnée se rapportant aux atouts sont mises en mémoire sous la forme d'une donnée unifiée dans une mémoire (7) centrale.

5. Le procédé mis en œuvre par ordinateur suivant l'une quelconque des revendications 1 à 4 précédentes, dans lequel la correspondance des représentations graphiques est effectuée par un algorithme de correspondance graphique.

6. Le procédé mis en œuvre par ordinateur suivant l'une quelconque des revendications 1 à 5 précédentes, dans lequel des ambiguïtés et/ou des désadaptations se produisant pendant la mise en correspondance des représentations graphiques sont résolues en réaction à une entrée d'utilisateur.

7. Le procédé mis en œuvre par ordinateur suivant l'une quelconque des revendications 1 à 6 précédentes, dans lequel des ambiguïtés et/ou des désadaptations se produisant pendant la mise en correspondance des représentations graphiques sont résolues automatiquement sur la base d'une donnée reçue, se rapportant aux atouts, concernant des atouts affectés par les ambiguïtés et/ou les désadaptation observées déclenchées par l'algorithme de mise en correspondance graphique en réaction à la détection d'ambiguïtés et/ou de désadaptations.

8. Le procédé mis en œuvre par ordinateur suivant l'une quelconque des revendications 5 à 7 précédentes, dans lequel l'algorithme de mise en correspondance graphique a subi un apprentissage automatique.

9. Le procédé mis en œuvre par ordinateur suivant l'une quelconque des revendications 1 à 8 précédentes, dans lequel le double (HDT) numérique holistique créé est renvoyé aux outils (2) utilisés pour la planification et/ou le fonctionnement de ladite installation (IF) industrielle pour relever le niveau technique des outils (2) respectifs et/ou pour établir des relations croisées de manière automatique entre les outils (2) différents.

10. Le procédé mis en œuvre par ordinateur suivant l'une quelconque des revendications 1 à 9 précédentes, dans lequel une donnée, se rapportant aux atouts, donnée en un format de donnée spécifique à un outil d'un outil (2) comprend une donnée d'image représentant les atouts, une donnée acoustique de sons créée par les atouts,
une donnée de texte décrivant les atouts,
une donnée graphique, une donnée topologique d'une topologie d'atout et/ou une donnée d'emplacement des emplacements d'atouts.

11. Un système utilisé pour la création d'un double (HDT) numérique holistique d'une installation (IF) industrielle, qui comprend une pluralité d'atouts,
ledit système (1) comprenant :
(a) des unités (36) de transformation propres à transformer en une représentation graphique commune une donnée, se rapportant aux atouts, collectée par différents outils (2), utilisés pour planifier et/ou faire fonctionner ladite installation (IE) industrielle en un format de donnée spécifique à un outil, et une donnée, se rapportant aux atouts, donnée par des sources de données de l'installation (IF) industrielle en un format de donnée spécifique à une source de données,
dans lequel des sources de données de l'installation (IF) industrielle, donnant une donnée se rapportant aux atouts en un format de donnée spécifique à une source de données, comprennent des atouts de capteur et une mémoire locale d'unité de commande installée dans ladite installation (IF) industrielle ;
(b) une unité (8) de mise en correspondance propre à faire correspondre les représentations graphiques de la donnée transformée se rapportant aux atouts pour donner une mise en correspondance entre les atouts de ladite installation (IF) industrielle ; et
(c) une unité (8) de fusion propre à fusionner les atouts mis en correspondance de ladite installation (IF) industrielle en un graphe unifié pour donner le double (HDT) numérique holistique de ladite installation (IF) industrielle,
dans lequel la représentation graphique commune d'une donnée transformée se rapportant aux atouts comprend, pour chaque atout, un nœud relié par des bords à d'autres nœuds représentant d'autres atouts de ladite installation (IF) industrielle ayant une relation physique ou logique avec l'atout respectif,
dans lequel les outils (2) donnant la donnée se rapportant aux atouts comprend des outils d'étages de cycle de vie différents de ladite installation (IF) industrielle, en particulier des outils d'ingénierie, des outils de gestion des opérations et/ou des outils de service et d'entretien, et
dans lequel le système est réglé pour traiter le double (HDT) numérique holistique créé de l'installation (IF) industrielle pour simuler et/ou pour prévoir un comportement opérationnel de ladite installation (IF) industrielle et pour établir et planifier un entretien prédictif de l'installation industrielle et améliorer ainsi l'efficacité de production de l'installation industrielle.
